# FASCICULE DE BREVET EUROPEEN

(11) **EP 0 893 938 B1**
(45) Date de publication et mention de la délivrance du brevet: **13.09.2006**
(21) Numéro de dépôt: 98401847.3
(22) Date de dépôt: 21.07.1998
(51) Int. Cl.: H05B 3/86, B64C 1/14

(54) **Vitrage chauffant feuilleté, notamment pour cockpit d'avion**
Beheizbare Verbundglasscheibe, insbesondere für Flugzeugcockpit
Heated laminated windshield, in particular for aircraft cockpit

(30) Priorité: 23.07.1997 FR 9709347
(43) Date de publication de la demande: 27.01.1999
(73) Titulaire: SAINT-GOBAIN GLASS FRANCE, 92400 Courbevoie (FR)
(72) Inventeur: Demeester, Jean, 45600 Sully sur Loire (FR)
(74) Mandataire: Jolly, Jean-Pierre

(56) Documents cités:
- EP-A- 0 376 192
- DE-A- 1 942 903
- FR-A- 1 390 519
- FR-A- 2 612 174
- US-A- 3 317 710
- US-A- 4 278 875
- M. NEAL: "TOUGH PROBLEMS SEEN THROUGH" FLIGHT INTERNATIONAL, vol. 86, 12 novembre 1964, pages 845-846, XP002062234 LONDON. GB.
- R.S. BRUCE: "THE DESIGN AND DEVELOPMENT OF GLASS WINDSCREENS FOR WIDE-BODIED AIRCRAFT" AIRCRAFT ENGINEERING, vol. 48, no. 7, 1 juillet 1976, pages 4-8, XP002062235 LONDON. GB.

## Description

La présente invention concerne un vitrage chauffant feuilleté, notamment pour cockpit d'avion.

Un vitrage d'avion comprend habituellement au moins deux feuilles de verre structurales liées entre elles par une première couche intercalaire en matière plastique transparente, par exemple en polyvinylbutyral (PVB) ou en polyuréthane, la feuille de verre structurale qui est tournée du côté extérieur de la cabine de pilotage étant recouverte d'au moins une troisième feuille, notamment en verre trempé ou renforcé chimiquement, par l'intermédiaire d'une autre couche intercalaire en PVB ou en polyuréthane.

La troisième feuille et la deuxième couche intercalaire ont des dimensions réduites par rapport à celles des deux feuilles de verre structurales, de manière à former sur celles-ci un rebord périphérique débordant destiné à être reçu dans une feuillure du cockpit.

Pour qu'un vitrage de ce type soit chauffant, il est connu de poser, lors de sa fabrication, entre la première couche intercalaire et la feuille de verre qui est tournée vers l'extérieur, un réseau de fils conducteurs fins et en général parallèles ou un film électroconducteur, ces éléments étant reliés à deux bandes d'amenée de courant ou collecteurs, qui sont reliées à une source de courant extérieure au vitrage.

On connaît par le document XP-00 206 2235 un vitrage chauffant feuilleté pour cockpit d'avion comportant les caractéristiques du préambule de la revendication 1. Un tel vitrage est appliqué au pare-brise du cockpit, à savoir la face avant du cockpit, laquelle est sujette à un dépôt de givre. Le positionnement de l'élément chauffant sous le vitrage externe permet de dégivrer efficacement le pare-brise du cockpit.

Dans les conditions normales d'usage qui prévalent en cours de vol, le vitrage est soumis à des contraintes de pression et de température entre les deux faces du vitrage qui génèrent des forces de cisaillement entre les différentes couches de vitrage et donc un déplacement relatif des différents éléments constituant la structure feuilletée, et en particulier un déplacement de la première couche intercalaire et des bandes d'amenée du courant par rapport aux fils. Dans ce déplacement, il peut se produire une rupture des fils électriques et donc une perturbation de la régulation de la température du vitrage. Des courts-circuits et des surchauffes localisées peuvent apparaître, allant jusqu'à provoquer la rupture d'une ou même des deux feuilles de verre structurales.

La présente invention propose un vitrage feuilleté chauffant pour cockpit d'avion qui soit désembuant et qui permette de garantir que, même dans le pire des cas, au moins une des feuilles de verre structurales reste intacte.

L'invention concerne à cet effet un vitrage chauffant pour cockpit d'avion conforme à la revendication 1.

L'invention propose que les moyens conducteurs soient disposés entre la feuille de verre structurale qui est tournée vers l'extérieur du cockpit et la deuxième couche intercalaire.

Grâce à cette disposition, le réseau de fils ou le film électroconducteur se trouvent reportés à une distance plus éloignée de la feuille de verre structurale qui est tournée vers l'intérieur de la cabine de pilotage qu'ils ne le sont dans le vitrage chauffant de la technique antérieure. Il en résulte que même si les désordres décrits précédemment se produisaient, seule la feuille de verre structurale tournée vers l'extérieur se briserait, tandis que ladite feuille de verre structurale intérieure resterait intacte.

Il est exact qu'avec la disposition selon l'invention, il y a risque que la troisième feuille de verre se brise en même temps que la feuille de verre tournée vers l'extérieur, mais cela n'entraîne aucune perte de sécurité, étant donné que ladite troisième feuille de verre n'est pas structurale puisqu'elle n'est pas pincée dans la feuillure du cockpit.

Un autre avantage du vitrage selon l'invention réside dans le fait que la puissance de chauffage est augmentée afin d'obtenir sur la face intérieure de la feuille de verre structurale intérieure une température suffisante pour éliminer la buée qui s'y forme.

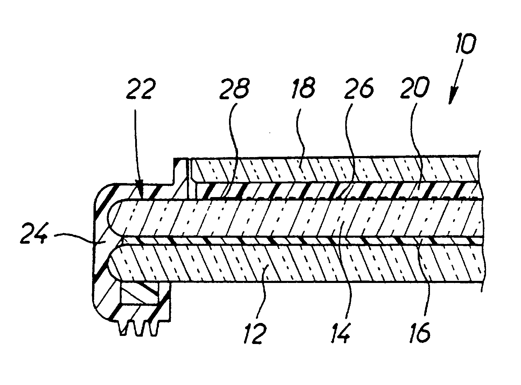

L'invention sera décrite à présent en regard de l'unique figure annexée qui représente une vue partielle en perspective d'un vitrage feuilleté chauffant selon l'invention.

Le vitrage chauffant 10 pour cockpit d'avion représenté sur la figure comprend, de façon connue en soi, deux feuilles de verre structurales 12, 14 reliées entre elles par l'intermédiaire d'une couche intercalaire 16 en matière plastique transparente.

La feuille de verre 14 qui est tournée vers l'extérieur du cockpit est recouverte sur sa face extérieure d'une troisième feuille de verre 18 par l'intermédiaire d'une seconde couche intercalaire 20 en matière plastique.

La feuille 18 et la couche intercalaire 20 ont une surface réduite par rapport aux deux feuilles de verre structurales. Il se forme donc sur celles-ci un rebord périphérique débordant 22 par lequel le vitrage peut être fixé dans une feuillure du cockpit, non représentée. Un joint annulaire 24 en silicone est fixé autour dudit rebord.

Selon l'invention, lors de la fabrication du vitrage, on insère entre la feuille de verre structurale 14 et la seconde couche intercalaire 20 des moyens conducteurs en couche fine, tels qu'un réseau de fils électriques 26 fins et parallèles ou un film électroconducteur, répartis sur tout ou partie de la surface du vitrage.

Plus particulièrement, dans le premier cas, on pose le réseau de fils électriques sur la seconde couche intercalaire 20 et l'on chauffe l'ensemble de manière que le réseau s'insère dans ladite couche intercalaire. On pose ensuite celle-ci sur la feuille de verre structurale 14. Dans le second cas, au contraire, le film électroconducteur est posé sur la feuille de verre structurale 14, puis la couche intercalaire 20 est posée sur cette dernière.

Le film électroconducteur peut être réalisé en oxyde d'étain dopé à l'indium ou au fluor.

Le réseau de fils électriques ou le film électroconducteur sont reliés à deux bandes d'amenée de courant, dont une seule 28 est représentée sur la figure. Ces bandes sont reliées à une source de courant extérieure au vitrage. Sur la figure, les bandes 28 ont été représentées dans le même plan que les fils conducteurs, mais elles peuvent également être déportées sur d'autres couches du vitrage.

On note que le réseau de fils 26 et les bandes d'amenée de courant 28 sont séparés de la feuille de verre structurale intérieure 12 par une épaisseur de matière relativement importante. Il en résulte que, si un court-circuit se produisait dans le réseau de fils, il pourrait, dans le pire des cas, occasionner des dégâts aux éléments du vitrage qui sont en contact avec les fils, mais en aucun cas à la feuille de verre intérieure 12. Même un vitrage ainsi endommagé pourrait encore résister aux pressions différentielles existant entre le milieu extérieur et le milieu intérieur.

## Revendications

1. Vitrage chauffant feuilleté, notamment pour cockpit d'avion du type comprenant :
• au moins deux feuilles de verre structurales (12, 14) destinées à être fixées dans une feuillure du cockpit et qui sont liées entre elles par une première couche intercalaire (16) en matière plastique transparente,
• au moins une troisième feuille, notamment en verre (18), non fixée dans la feuillure et qui est liée à la feuille de verre structurale (14) qui est tournée vers l'extérieur, par l'intermédiaire d'une seconde couche intercalaire (20) en matière plastique,
• et des moyens chauffants conducteurs électriques en couche fine (26) s'étendant sur une partie au moins de la surface du vitrage et disposés entre deux bandes d'amenée de courant ou collecteurs (28), qui sont reliées à une source de courant extérieure au vitrage,
**caractérisé en ce que** lesdits moyens conducteurs (26) sont disposés entre la feuille de verre structurale (14) qui est tournée vers l'extérieur du cockpit et la deuxième couche intercalaire (20).

2. Vitrage chauffant feuilleté selon la revendication 1, **caractérisé en ce que** lesdits moyens conducteurs à couche fine sont constitués par un réseau de fils conducteurs (26) fins et parallèles entre eux.

3. Vitrage chauffant feuilleté selon la revendication 1, **caractérisé en ce que** lesdits moyens conducteurs à couche fine sont constitués par un film électroconducteur, par exemple en oxyde d'étain dopé à l'indium ou au fluor.

4. Vitrage chauffant feuilleté selon l'une des revendications 1 à 3, **caractérisé en ce que** lesdites bandes d'amenée de courant (28) sont disposées entre des couches du vitrage autres que celles qui comprennent entre elles lesdits moyens conducteurs (26).

## Claims

1. Heated, laminated glazing, in particular for aircraft cockpits, of the type comprising:
• at least two structural glass sheets (12, 14) designed to be fixed in a cockpit rebate and which are bonded together by a first interlayer (16) of transparent plastics material,
• at least a third sheet, in particular of glass (18), not fixed in the rebate and which is bonded to the outboard structural glass sheet (14) by means of a second interlayer (20) of plastics material,
• and thin-film electrically conductive heating means (26) extending over at least part of the surface of the glazing and disposed between two current supply strips or collectors (28), which are connected to a current source external to the glazing,
**characterised in that** said conductive means (26) are disposed between the outboard structural glass sheet (14) and the second interlayer (20).

2. Heated, laminated glazing according to claim 1, **characterised in that** said thin film conductive means consist of a network of thin, mutually parallel conductive wires (26).

3. Heated, laminated glazing according to claim 1, **characterised in that** said thin film conductor means consist of an electroconductive film, for example of indium- or fluorine-doped tin oxide.

4. Heated, laminated glazing according to any one of claims 1 to 3, **characterised in that** said current supply strips (28) are disposed between glazing plies other than those which comprise between them said conductor means (26).

## Patentansprüche

1. Heizbare Verglasung in Laminatform für ein Flugzeug-Cockpit, vom Typ umfassend:
- wenigstens zwei zur Befestigung in einem Falz des Cockpits bestimmte strukturelle Glasschichten bzw. -folien (12, 14), die miteinander durch eine Zwischenschicht (16) aus einem durchsichtigen Kunststoffmaterial verbunden sind,
- wenigstens eine dritte Schicht bzw. Folie (18), insbesondere aus Glas, die nicht in dem Falz befestigt ist und mit der dem Außenraum zugewandten strukturellen Glasschicht bzw. - folie (14) vermittels einer zweiten Zwischenschicht (20) aus einem Kunststoffmaterial verbunden ist,
- sowie als Heizmittel dienende elektrische Leiter in dünner Schicht (26), welche sich wenigstens über einen Teil der Fläche der Verglasung erstrecken und zwischen zwei Stromzufuhrstreifen bzw. -bändern oder Kollektoren (28) angeordnet sind, die mit einer Stromquelle außerhalb der Verglasung verbunden sind,
**dadurch gekennzeichnet, dass** die genannten Leitermittel (26) zwischen der dem Raum außerhalb des Cockpits zugewandten strukturellen Glasschicht bzw. -folie (14) und der zweiten Zwischenschicht (20) angeordnet sind.

2. Heizbare Verglasung in Laminatform nach Anspruch 1, **dadurch gekennzeichnet, dass** die genannten Dünnschicht- Leitermittel aus einem Netz dünner und untereinander paralleler Drähte (26) bestehen.

3. Heizbare Verglasung in Laminatform nach Anspruch 1, **dadurch gekennzeichnet, dass** die genannten Dünnschicht-Leitermittel aus einem elektrisch leitenden Film, beispielsweise aus mit Indium oder Fluor dotiertem Zinnoxyd, bestehen.

4. Heizbare Verglasung in Laminatform nach einem der Ansprüche 1 bis 3, **dadurch gekennzeichnet, dass** die genannten Stromzufuhrbänder bzw. -streifen (28) zwischen anderen Schichten der Verglasung als den die genannten Leitermittel (26) enthaltenden Schichten angeordnet sind.
